# EUROPEAN PATENT SPECIFICATION

(11) **EP 0 571 187 B1**
(45) Date of publication and mention of the grant of the patent: **13.08.1997**
(21) Application number: 93303866.3
(22) Date of filing: 19.05.1993
(51) Int. Cl.: C09D 201/10, C08G 18/61, B05D 7/26

(54) **Aqueous surface coating composition**
Wässrige Oberflächenbeschichtungszusammensetzung
Composition aqueuse de revêtement de surface

(30) Priority: 20.05.1992 JP 127366/92
(43) Date of publication of application: 24.11.1993
(73) Proprietor: Nippon Paint Co., Ltd., Kita-ku, Osaka-shi, Osaka 531 (JP)
(72) Inventor: Miwa, Hiroshi, Ibaraki-shi, Osaka (JP); Watanabe, Masakazu, Toyonaka-shi, Osaka (JP); Kuwajima, Teruaki, Higashiosaka-shi, Osaka (JP)
(74) Representative: Perry, Robert Edward

(56) References cited:
- DE-C- 3 329 448

## Description

### BACKGROUND OF THE INVENTION

The present invention relates to a surface coating composition, and more particularly, to an aqueous composition forming film coating in superficial application to a suitable substrate.

Automobile body coatings are typically applied as a multi-film coating comprising base and clear film layers. Organic-solvent based paint is generally employed to form the multi-film coating in this type of application.

Nowadays, taking into account such environmental considerations as air pollution, the use of organic solvents is being regulated, and therefore the employment of an aqueous coating instead of an organic-solvent based coating is under investigation. For example, a dual-layer, single-bake coating, comprising a base film formed by an aqueous urethane dispersion including a curing agent composed of blocked isocyanate, together with melamine has already been taught. A coating composition slurry comprising a hydrophobic polyester resin, a water-soluble polyester resin, and at least two types of curing agent selected from the group consisting of aminoplast resins and blocked isocyanates; as well as a water-dispersed under-coating comprising a polyurethane resin having polyether chains, and a curing agent including blocked isocyanate together with melamine, have also been provided.

The foregoing aqueous compositions form coatings capable of providing sufficient resistance to acidity in rain; however, their water repellency is insufficient, since resins contained in these compositions include hydrophilic groups, such as carboxyl and polyether groups, in large quantity.

### SUMMARY OF THE INVENTION

It is an object of the present invention to improve the water-repellency of a highly acid-proof coating formed by an aqueous coating composition.

It is another object to realise an aqueous composition-derived multi-film coating exhibiting both high resistance to acids and good water-repellency.

An aqueous coating composition according to one aspect of the present invention comprises an aqueous resin containing polysiloxy groups and which is obtainable by neutralising an acidic resin with alkali, the aqueous resin being selected from aqueous acrylic resin, aqueous polyester resin, aqueous alkyd resin, aqueous urethane resin, and aqueous polyamide resin;
a cross-linking agent comprising a melamine resin having an alkyl ether group and a non-yellowing, multi-functional, blocked isocyanate compound selected from aliphatic, multi-functional, blocked isocyanates and alicyclic, multi-functional, blocked isocyanates, wherein the mixing ratio by weight of the aqueous resin (A) to the cross-linking agent (B) is A:B = 30:70 to 90:10;
an amino resin; and
a non-yellowing, multi-functional blocked isocyanate compound.

Such an aqueous coating composition can be used to form a surface coating exhibiting satisfactory water-repellent and acid-proof characteristics.

In another aspect of the present invention, a multi-film coating comprises a base film formed from a water-base paint, and a superficial film formed over the base film and made from an aqueous coating composition of the invention.

If the base film comprises an aqueous acrylic resin including amide groups, bleeding between the base and superficial films is minimised, thus improving the appearance of the coating. A pre-heat process for the base film is also effective for improving the appearance of the coating.

### BRIEF DESCRIPTION OF THE DRAWING

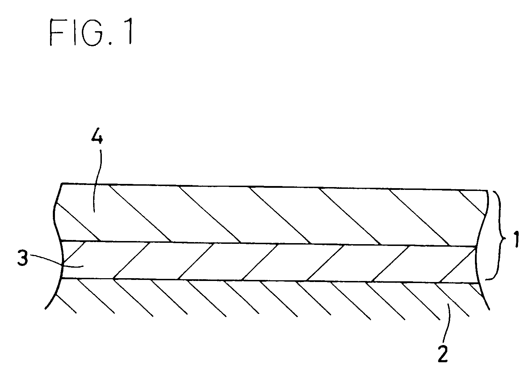

Fig. 1 is a schematic representation in cross-section of an applied embodiment of a multi-film surface coating according to the present invention.

### DETAILED DESCRIPTION OF THE INVENTION

### Aqueous Resin

The aqueous resin employed in this invention may be an acrylic resin, a polyester resin, an alkyd resin, a urethane resin or a polyamide resin.

The acrylic resin may be a common polymer obtained by polymerizing at least one from the group of acrylic or methacrylic acids, or derivatives thereof.

Examples of acrylic and methacrylic acid derivatives include: a hydroxyl group including derivatives such as 2-hydroxyethyl acrylate, hydroxypropyl acrylate, 2-hydroxyethyl methacrylate, hydroxypropyl methacrylate, hydroxybutyl acrylate, and hydroxybutyl methacrylate; alkylacrylates including nitrogen, such as dimethylaminoethyl acrylate; methacrylates including nitrogen, such as dimethylaminoethyl methacrylate; an amide group including derivatives such as acrylic amide, methacrylic amide, and N-methylol acrylamide; a nitrile group containing derivatives such as acrylnitrile and methacrylnitrile; and an alkylacrylate or alkylmethacrylate, such as methyl acrylate, methyl methacrylate, ethyl acrylate, ethyl methacrylate, n-butyl acrylate, n-butyl methacrylate and 2-ethylhexyl acrylate.

The foregoing acrylic resin can be a copolymer including units derived from a carboxyl group containing compounds such as crotonic acid, itaconic acid, maleic acid and fumaric acid; a hydroxyl group containing compounds such as allyl alcohol, methallyl alcohol, and "PLACCEL FM-1" or "PLACCEL FM-2" (product of Daicel Chemical Industries Kabushiki Kaisha); an aromatic compound such as styrene, α -methyl styrene, vinyl toluene and t-butyl styrene; a α -olefin such as ethylene or propylene; a vinyl compound such as vinyl acetate or vinyl propionic acid; or a diene compound such as butadiene or isoprene.

The foregoing acrylic acid can be used singly or in combination.

The above-mentioned polyester resin is a common polymer obtained by polycondensation between a polybasic acid and a polyhydric alcohol.

Examples of the polybasic acid therein include a straight-chain dibasic acid such as oxalic acid, succinic acid, succinic anhydride, adipic acid, azelaic acid, sebacic acid; an aromatic polybasic acid such as phthalic acid, phthalic anhydride, isophthalic acid, terephthalic acid, tetrahydro phthalic anhydride, hexahydro phthalic acid, hexahydro phthalic anhydride, tetrabromo phthalic anhydride, trimellitic acid, trimellitic anhydride, pyromellitic acid, pyromellitic anhydride; and an unsaturated dibasic acid such as maleic acid, maleic anhydride, fumaric acid, or itaconic acid. These polybasic acids can be used singly or in combination.

Examples of the polyhydric alcohol include glycols such as ethylene glycol, propylene glycol, 1, 3-butylenediol, 1,6-hexanediol, diethylene glycol, neopentyl glycol, triethylene glycol; as well as bisphenol A hydride, bisphenoldihydroxypropyl ether, glyceline, trimethylolethane, trimethylolpropane, and pentaerythritol. These polyhydric alcohols can be used singly or in combination.

Other polybasic acids and polyhydric alcohols available for synthesizing polyester resin also can be used. In addition, in order to adjust molecular weight of the polyester resin in synthesis thereof according to a general method, mono-basic acid and mono-hydric alcohol can be used as well.

The foregoing polyester resin can be used singly or in combination.

Alkyd resin which can be employed in this invention is polyester resin esterified by using a drying oil or a fatty acid. Examples of suitable drying oils and fatty acids include linseed oil, tung oil, oiticica oil, dehydrated castor oil, cocoanut oil, hydrofined cocoanut oil, Cardura-E of Shell Chemical Industry, rice bran fatty acid, tall oil fatty acid, soybean oil and octyl acid. The foregoing polyester resin denatured by rosin or phenol resin also can be used as the alkyd resin.

The foregoing alkyd resin can be used singly or in combination.

Urethane resin which is usable for this invention is resin obtained by condensation polymerization between a diisocyanate compound and a diol compound.

Examples of the foregoing diisocyanate compound include an aliphatic diisocyanate, an alicyclic diisocyanate, an aromatic-aliphatic diisocyanate, or an aromatic diisocyanate such as 1, 2-ethylenediisocyanate; 1,4-tetramethylenediisocyanate; 1,6-hexamethylenediisocyanate; 2,2,4-trimethyl-1,6-hexamethylenediisocyanate; 2,4,4-trimethyl-1,6-hexamethylenediisocyanate; 1,12-dodecanediisocyanate; ω,ω'-diisocyanatodipropylether; cyclobutane-1,3-diisocyanate; dicyclohexane-1, 3-diisocyanate; cyclohexane-1,4-diisocyanate; 2,2-diisocyanate-1-methyl-cyclohexane; 2,6-disocyanate-1-methyl-cyclohexane; 3-isocyanatomethyl-3,5,5-trimethyl cyclohexylisocyanate (Isophorone diisocyanate); 2,5-bis-(isocyanatomethyl)-8-methyl-1, 4-methano-decahydronaphthalene; 3,5-bis-(isocyanatomethyl)-8-methyl-1,4-methano-decahydronaphthalene; 1,5-bis(isocyanatomethyl)-4,7-methano-hexahydroindane; 2,5-bis(isocyanatomethyl)-4, 7-methano-hexahydroindane; 1,6-bis(isocyanatomethyl)-4,7-methano-hexahydroindane; 2,6-bis(isocyanatomethyl)-4, 7-methano-hexahydroindane; 1,5-bis(isocyanate)-4,7-methano-hexahydroindane; 2,5-bis(isocyanate)-4,7-methano-hexahydroindane; 1,6-bis(isocyanate)-4,7-methano-hexahydroindane; 2,6-bis(isocyanate)-4,7-methano-hexahydroindane; dicyclohexyl-2,4'-diisocyanate; dicyclohexyl-4, 4'-diisocyanate; 2,4-hexahydrotoluylene diisocyanate; 2,6-hexahydrotoluylene diisocyanate; perhydro-2,4'-diphenylmethane diisocyanate; perhydro-4,4'-diphenylmethaneisocyanate; ω,ω'-diisocyanato-1,4-diethyl-benzene; 1,3-phenylenediisocyanate; 1,4-phenylenediisocyanate; 4,4'-diisocyanato-diphenyl; 4,4'-diisocyanato-3, 3'-dichlorodiphenyl; 4,4'-diisocyanato-3, 3'-dimethoxy-diphenyl; 4, 4'-diisocyanato-3, 3'-dimethyl-diphenyl; 4,4'-diisocyanato-3, 3'-diphenyl-diphenyl; 2,4'-diisocyanato-diphenylmethane; 4,4'- diisocyanatodiphenylmethane; naphthalene-1,5-diisocyanate; toluylenediisocyanate; 2,4-toluylene-diisocyanate; 2,6-toluylene-diisocyanate; m-xylylene-diisocyanate; diphenylmethane-2,4'-diisocyanate; and diphenylmethane-4,4'-diisocyanate.

Examples of the foregoing diol compound include an aliphatic diol such as neopentylglycol, or hexane diol; a diatomic alcohol such as 1,2-alkyleneoxide, ethylene oxide, and propylene oxide; an alicyclic diol such as 1,4-cyclohexane diol, 4,4'-dihydroxy cyclohexyl-2, or 2-propane; an aromatic diatomic alcohol such as bis(ethoxyl)bisphenol A and bis(propoxyl) bisphenol A; a polyether diol such as polyethyleneoxide diol, polyethyleneoxidepropylene oxide diol, polypropyleneoxide diol and polytetramethyleneoxide diol; a polyester diol obtained by polymerization between one of the foregoing diol compounds and a polybasic acid or an anhydride thereof; a polycarbonate diol; polycaprolactone diol; or a diol having an acid group, such as dimethylolpropionic acid.

Examples of a polycarboxylic acid and an anhydride thereof composing the foregoing polyester diol include maleic acid, fumaric acid, mesaconic acid, citraconic acid, itaconic acid, glutaric acid, adipic acid, isophthalic acid and terephthalic acid. It is preferable to use dicarboxylic acid as the polycarboxylic acid.

The foregoing diol compound can be used singly or in combination. However, it is preferable to employ, as an essential component, a diol having an acid group in order to make the urethane resin a water-based urethane resin.

The foregoing urethane resin can be used singly or in combination.

The polyamide resin which can be employed in this invention can be obtained by condensation polymerization between a diamine compound and a polybasic acid or an amino acid.

Examples of the foregoing diamine compound include ethylene diamine, tetramethylene diamine, hexamethylene diamine, piperazine; 4,4'-diaminodiphenylether; 1,4-diaminocyclohexane; 1,12-diaminododecane; 1,7-diaminoheptane; and 1,8-diaminonaphthalene.

Examples of the foregoing polybasic acid include a straight-chain dibasic acid such as oxalic acid, succinic acid, succinic anhydride, adipic acid, azelaic acid or sebacic acid; an aromatic polybasic acid such as phthalic acid, phthalic anhydride, isophthalic acid, terephthalic acid, tetrahydro phthalic anhydride, hexahydro phthalic acid, hexahydro phthalic anhydride, tetrabromo phthalic anhydride, trimellitic acid, trimellitic anhydride, pyromellitic acid or pyromellitic anhydride; and an unsaturated acid such as maleric acid, maleric anhydride, fumaric acid or itaconic acid.

Examples of the foregoing amino acid include alanine, histidine, serine, arginine, asparatic acid, glutamic acid and phenylalanine. These diamine compounds, polybasic acids and amino acids can respectively be used singly or in combination.

The foregoing polyamide resin can be used singly or in combination.

The aqueous resin described above includes polysiloxy groups. The polysiloxy group is expressed by the general formula (1) shown below, and enhances water repellency of the coating. 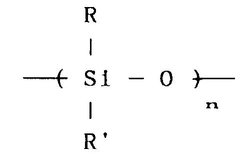 wherein, R and R' are organic residues such as alkyl groups or phenyl groups. **n** is a number ranging from 5 to 300, preferably from 6 to 50. If **n** is less than 5, it is impracticable to realize a coating providing good water repellency. Conversely, a resin produced wherein **n** is greater than 300, would be difficult to dilute with water.

A preferable polysiloxy group may be a dimethylpolysiloxy group, a diphenylpolysiloxy group or a methylphenylpolysiloxy group.

It is preferable to set the proportion of the polysiloxy group contained in the aqueous resin to be within 3 to 50 weight %. If the content is less than 3 weight %, it is impracticable to realize a coating providing good water resistance.
Conversely, a resin produced wherein the proportion is over 50 weight %, would be difficult to dilute with water. The preferable proportion of the polysiloxy group content is from 5 to 20 weight %.

The polysiloxy group can be introduced into the resin described above by, for example, (1) copolymerizing polysiloxane macromer at the same time the resin is synthesized or (2) denaturing the resin by polysiloxane.

When employing method (1) mentioned above, such polysiloxane macromers as follows can be used.

### ⓞ Acrylic Resin Employed as Aqueous Resin

Polydimethylsilylpropyl methacrylate having trimethylsilyl groups at terminal ends thereof, examples of which include "FM-0711", "FM-0721" and "FM-0723", products of Chisso Kabushiki Kaisha.

### ⓞ Polyester Resin Employed as Aqueous Resin

Dibasic acid including polysiloxy groups such as dimethyl polysiloxane having a carboxyl group at both terminal ends thereof, examples of which include "BY16-750" of TORAY DOW CORNING SILICONE Kabushiki Kaisha and "TSF4770" of TOSHIBA SILICONE Kabushiki Kaisha.

A diol compound including polysiloxy groups such as dimethyl polysiloxane having a hydroxyl group at both terminal ends thereof can be used as a polyhydric alcohol. Examples of such diol compounds include "BY16-848", "BY16-001", "BY16-002", "BY16-003" and "BY16-004" of TORAY DOW CORNING SILICONE Kabushiki Kaisha, and "TSF4751" of TOSHIBA SILICONE Kabushiki Kaisha.

### ⓞ Urethane Resin Employed as Aqueous Resin

The same diol compound having polysiloxy groups and mentioned in the case of the polyester resin can be used as a diol compound.

### ⓞ Polyamide Resin Employed as Aqueous Resin

Diamine compounds having polysiloxy group such as dimethyl polysiloxy diamine or diphenylpolysiloxy diamene can be used as a diamine component. Examples of the diamine compound include "XF42-A2645" and "XF42-A2646" of TOSHIBA SILICONE Kabushiki Kaisha, "X-22-161AS" of Sinetsu Chemical Industries Kabushiki Kaisha, and "BY16-853" of TORAY DOW CORNING SILICONE Kabushiki Kaisha.

The same dibasic acid having polysiloxy group and mentioned in the case of the polyester resin can be used as a polybasic acid component.

The other method (2) mentioned above can be performed by heating the resin together with polysiloxane having functional groups such as acid groups, hydroxyl groups, silanol groups, alkoxysilyl groups, epoxy groups or amino groups. Examples of such polysiloxane include "KR-211", "KR-212", "KR-216", "KR-213", "KR-217" and "KR-9218" of Shinetsu Chemical Industries Kabushiki Kaisha; "YF3800", "YF3057", "YF3804", "XF42-A2645", "TSF-4770", "TSF-4731" of TOSHIBA SILICONE Kabushiki Kaisha; and "SH-6018" and "DC3074" of TORAY DOW CORNING SILICONE Kabushiki Kaisha. Of the foregoing, "DC3074" is most preferable.

The aqueous resin employed in this invention can be obtained by converting the foregoing acrylic resin, polyester resin, alkyd resin, urethane resin or polyamide resin into an aqueous resin. These resins can be converted into an aqueous resin by neutralizing an acid group of the resin, for example, a carboxyl group, with alkali.

An alkali such as monomethylamine, dimethylamine, trimethylamine, monoethylamine, triethylamine, monoisopropylamine, diisopropylamine, diethylenetriamine, triethylenetetramine, monoethanolamine, diethanolamine, triethanolamine, monoisopropanolamine, diisopropanolamine, dimethylethanolamine, morpholine, methyl morpholine, piperazine, ammonia, sodium hydroxide, potassium hydroxide or lithium hydroxide can be used for neutralizing the resin.

The aqueous resins described above can be used singly or in combination.

### Amino Resin

The amino resin employed in this invention works as a cross-linking agent for the aforedescribed aqueous resin including polysiloxy groups. A melamine resin including an alkylether group, i.e., a melamine resin including an alkoxy group such as a methoxy group, an ethoxy group, a n-buthoxy group or a isobuthoxy group can be used as the amino resin.

The foregoing melamine resin can be obtained by an etherification reaction between a product which is obtained by an addition reaction or an addition-condensation reaction between melamine and an aldehyde such as formaldehyde or paraformaldehyde, and a monoatomic alcohol having 1 to 4 carbon atoms.

### Non-Yellowing Multifunctional Blocked Isocyanate Compound

The non-yellowing multifunctional blocked isocyanate compound employed in this invention works as a curing agent for the aqueous resin as well as the aforedescribed amino resin, and accordingly improves the acid resistance of the coating.

An aliphatic multifunctional blocked isocyanate such as blocked hexamethylenediisocyanate (HDI), or an alicyclic multifunctional blocked isocyanate such as blocked Isophorone diisocyanate (IPDI) can be used as the non-yellowing, multifunctional, blocked isocyanate compound. These blocked isocyanates are partially or completely blocked using a blocking agent in order to improve their heat-dissociation properties. The blocked multifunctional isocyanate can be used singly or in combination. Also, a blocked 4,4'-diphenylmethane diisocyanate (MDI) or a blocked 4,4'-methylenebis (cyclohexyl isocyanate) (hydrogenated MDI) can be partially used. Further, a multifunctional blocked isocyanate, obtained by copolymerizing an isocyanate monomer such as isocyanate ethylmethacrylate or N-methacryloylcarbamate with other monomers, wherein the isocyanate monomer is blocked to promote heat dissociation, also can be used as a non-yellowing, multifunctional, blocked isocyanate compound.

An aromatic multifunctional isocyanate compound provides good reactivity compared with an aliphatic multifunctional isocyanate compound; however, it is impracticable to use it as a non-yellowing multifunctional blocked isocyanate compound, since it yellows easily under exposure to the atmosphere.

The blocking agent for blocking the foregoing multifunctional isocyanate compound can be, for example, acetone oxime, cyclohexanone oxime, acetophenone oxime, benzophenone oxime, methylethylketone oxime.

The most preferable non-yellowing multifunctional blocked isocyanate compound for this invention is Isophorone diisocyanate blocked by methylethylketone oxime.

### Mixing Ratio

For the aqueous coating composition of the present invention, a mixture of the amino resin and the non-yellowing multifunctional blocked isocyanate compound is added as a crosslinking agent (B) to the aqueous resin (A) having polysiloxy groups. The mixing proportion of the aqueous resin (A) and the cross-linking agent (B) is A:B = 30:70 to 90:10 by weight, preferably 50:50 to 80:20 by weight. If the aqueous resin (A) is less than 30 weight % and the cross-linking agent (B) is over 70 weight %, acid resistance of the coating is reduced when the amino resin in the cross-linking agent (B) is rich; whereas the strength of the coating becomes insufficient when the non-yellowing multifunctional blocked isocyanate compound in the cross-linking agent (B) is rich. Conversely, if the aqueous resin (A) is over 90 weight % and the cross-linking agent (B) is less than 10 weight %, the aqueous resin does not cure sufficiently, deteriorating the water repellency of the coating.

For the cross-linking agent (B), the mixing proportion of the amino resin (B1) and the non-yellowing multifunctional blocked isocyanate compound (B2) is B1:B2 = 50:50 to 90:10 by weight, preferably 70:30 to 90:10 by weight. If the amino resin (B1) is less than 50 weight %, the aqueous resin does not cure sufficiently, deteriorating water repellency of the coating. Conversely, if the amino resin (B1) is over 90 weight %, acid resistance of the coating is reduced.

### Other Components

The aqueous coating composition according to the present invention can contain other components in addition to the aforedescribed essential components. Such other components can be, for example, a surface conditioner, a viscosity control agent such as non water-soluble particles, a thickner, an antioxidant, an ultraviolet absorber, a curing catalyst, or an antifoaming agent.

### Multifilm Coating

Fig. 1 is a schematic view of a multifilm coating of the present invention. The multifilm coating 1 is formed on a not-shown base layer, applied onto a substrate 2 such as an automobile body, which includes an electrodeposition layer and an intermediate coat layer. The coating 1 principally comprises a base film 3 formed on the substrate 2, and a clear film 4 formed on the base film 3.

The base film 3 is made from a water base paint, and is usually 10 to 30 µ m, preferably 10 to 20 µ m in thickness. The water base paint can be a common water base paint containing a color pigment, an aluminum pigment or a mica pigment. The most preferable water base paint is one containing as a binder an aqueous acrylic resin including amide groups. The water acrylic resin including amide groups can be obtained by neutralizing a copolymer with amine, wherein the copolymer is obtained by copolymerizing an amide monomer such as acryl amide or methacryl amide with other monomers such as an acid monomer. The water base paint can contain such additives as a surface conditioner, a viscosity control agent such as non water-soluble particles, a thickner, an antioxidant, an ultraviolet absorber, a curing catalyst or an antifoaming agent in addition to the foregoing pigment.

The clear film 4 is made from the aqueous coating composition of the present invention, and is usually 20 to 80 µ m, preferably 20 to 60 µ m in thickness.

When forming the multifilm coating 1, problems of environmental contamination are minimized; since both the base film 3 and the clear film 4 are made from the water-base paint, and therefore it is not necessary to use an organic solvent. In addition, the clear film 4 exhibits good water repellency and acid resistance characteristics, since the clear film 4 is formed from the aqueous coating composition according to the present invention.

### Method for Forming Multifilm Coating

The foregoing multifilm coating 1 can be formed according to the following method.

To begin with, a base film 3 is formed on a substrate 2 by applying a water base paint. The paint can be applied by such methods as brush coating, spray coating, electrodeposition, flow coating, dip coating or roller coating.

The applied water base paint can be subjected to a pre-heat treatment, if so desired. In the pre-heat treatment, the applied water base paint is heated for 2 to 3 minutes at 50 to 100°C. If the pre-heat treatment is employed, the appearance of the multifilm coating 1 improves.

Next, the clear film 4, which can be formed by applying an aqueous coating composition of the present invention, is formed onto the base film 3. The composition can be applied by the same methods mentioned for the water base paint forming the base film 3. It is preferable to dilute the composition in order to adjust the viscosity thereof by adding water, before the composition is applied.

The applied aqueous coating composition is baked and dried for 15 to 60 minutes at 100 to 200°C ; thereby the multifilm coating 1 is obtained.

### DESCRIPTION OF THE PREFERRED EMBODIMENTS

### Preparation #1 (Synthesis of Acrylic Resin Including Polysiloxy Groups)

A 2ℓ reactor equipped with an agitator, a temperature controller, and a condenser was prepared. Methoxypropanol of 126 weight parts was introduced into the reactor, wherein it was then maintained at 120°C. Next, a monomer mixture comprising styrene of 15 weight parts, methyl methacrylate of 63 weight parts, 2-hydroxyethylmethacrylate of 48 weight parts, n-butylacrylate of 117 weight parts, methacrylic acid of 27 weight parts, "FM-0711" (polydimethylsiloxy methacrylate of Chisso Kabushiki Kaisha: molecular weight = 1,000) of 30 weight parts, and t-butylperoxi-2-ethylhexanoate of 9 weight parts was added dropwise into the reactor for 3 hours, and then the contents of the reactor was stirred for 1 hour.

Subsequently, dimethylethanolamine of 28 weight parts and deionized water of 536 weight parts were added into the reactor, obtaining an acrylic resin thereby. The proportion of volatile components, the number average molecular weight, the OH value, and the acid value of the obtained acrylic resin were 30%; 5,000; 70; and 58, respectively.

### Preparation #2 (Synthesis of Acrylic Resin Including Polysiloxy Groups)

A monomer mixture comprising styrene of 24 weight parts, methylmethacrylate of 73 weight parts, 2-hydroxyethylmethacrylate of 48 weight parts, n-butylacrylate of 107 weight parts, methacrylic acid of 18 weight parts, "FM-0721" (polydimethylsiloxy methacrylate of Chisso Kabushiki Kaisha, molecular weight = 5,000) of 30 weight parts, and t-butylperoxi-2-ethylhexanoate of 5 weight parts was added dropwise for 3 hours into the same reactor used in Preparation #1, containing methoxypropanol of 126 weight parts, and contents of the reactor was then stirred for 1 hour.

Subsequently, dimethylethanol amine of 19 weight parts and deionized water of 550 weight parts were added into the reactor, obtaining an acrylic resin thereby. The proportion of volatile components, the number average molecular weight, the OH value and the acid value of the obtained acrylic resin were 30%; 12,000; 70; and 40, respectively.

### Preparation #3 (Synthesis of Acrylic Resin Including Polysiloxy Groups)

Diethyleneglycolmonobutylether of 125 weight parts was added into the same reactor employed in Preparation #1, wherein it was then maintained at 120°C . Next, a monomer mixture comprising styrene of 60 weight parts, methylmethacrylate of 10 weight parts, n-butylmethacrylate of 130 weight parts, 4-hydroxybutylacrylate of 50 weight parts, methacrylic acid of 35 weight parts and t-butylperoxi-2-ethylhexanoate of 15 weight parts was added dropwise into the reactor for 3 hours, and then the contents of the reactor were stirred for 2 hours. Subsequently, "BY16-855" (dimethylpolysiloxane having epoxy groups at terminal ends, of TORAY DOW CORNING SILICONE Kabushiki Kaisha: epoxy equivalent = 650) of 15 weight parts was added into the reactor, and the contents of the reactor was further stirred for 2 hours.

Next, dimethylethanolamine of 28 weight parts and deionized water of 546 weight parts were added into the reactor, obtaining an acrylic resin thereby. The proportion of volatile components, the number average molecular weight, the OH value and the acid value of the acrylic resin were 30%; 12,000; 65; and 50, respectively.

### Preparation #4 (Synthesis of Polyester Resin Including Polysiloxy Groups)

Bishydroxyethyltaurine of 67 weight parts, neopentylglycol of 65 weight parts, azelaic acid of 118 weight parts, phthalic anhydride of 93 weight parts, "BY16-848" (dimethylpolysiloxane having hydroxyl groups at terminal ends, of TORAY DOW CORNING SILICONE Kabushiki Kaisha: alcohol equivalent = 650) of 15 weight parts, and xylene of 27 weight parts were added into the reactor employed in preparation #1, having a decanter for removing water produced in the reactor, and then the contents of the reactor were heated. Therein, water thus produced by a reaction in the reactor was removed through the decanter as a xylene azeotrope.

Next, the contents of the reactor was heated under reflux for 2 hours, and then was maintained at 190°C. After that, stirring of the contents and removal of water were continued until acid value based on carboxylic acid reached 62.5, and then the contents was cooled to 140°C. Subsequently, Cardura E10 (glycidyl ester of versatic acid of Shell Chemical Industry) of 157 weight parts was added dropwise into the reactor for 30 minutes, and then the contents was further stirred for 2 hours.

Next, dimethylethanolamine of 47 weight parts and deionized water of 1,100 weight parts were added into the reactor, obtaining a polyester resin thereby. The proportion of non-volatile ingredients, the number average molecular weight, the OH value and the acid value of the obtained polyester resin were 30%; 1,054; 90; and 50, respectively.

### Preparation #5 (Synthesis of Urethane Resin Including Polysiloxy Groups)

N-methylpyrolidone of 162 weight parts, Isophorone diisocyanate of 83 weight parts, polypropyleneglycol (hydroxyl group value = 56; molecular weight = 2,000) of 50 weight parts, dimethylolpropionic acid of 43 weight parts, "BY16-848" (dimethylpolysiloxane having hydroxyl groups at terminal ends, of TORAY DOW CORNING SILICONE Kabushiki Kaisha: alcohol equivalent = 650) of 25 weight parts and "PLACCEL-CD-205PL" (polycaprolactonediol of Daicel Chemical Industries Kabushiki Kaisha: average molecular weight = 500) of 100 weight parts were added into the reactor employed in Preparation #1, and then the contents of the reactor was heated to 80°C. Dibutyltindilaurate of 0.5 weight parts was further added into the reactor, starting a reaction of the contents which continued for 120 minutes.

Next, dimethylethanolamine of 29 weight parts and deionized water of 509 weight parts were added into the reactor, obtaining an urethane resin thereby. The proportion of non-volatile components and the acid value of the urethane resin were 30% and 58, respectively.

### Preparation #6 (Synthesis of Polyamide Resin Including Polysiloxy Groups)

N-methylpyrolidone of 100 weight parts, azelaic acid of 80 weight parts, phthalic anhydride of 130 weight parts, piperazine of 26 weight parts, "BY16-853" (dimethylpolysiloxane having amino groups at terminal ends, of TORAY DOW CORNING SILICONE Kabushiki Kaisha: amino equivalent = 650) of 30 weight parts, ethylene diamine of 34 weight parts and xylene of 62 weight parts were added into the reactor employed in Preparation #4, and then the contents of the reactor was heated. Therein, water produced in the reactor was removed as a xylene azeotrope.

Under about two hours reflux, temperature of the contents reached 150°C, and stirring of the contents and removal of water were continued until acid value based on carboxylic acid reached 50, and then the contents was cooled to 120°C.

Next, dimethylethanolamine of 25 weight parts and deionized water of 513 weight parts were added into the reactor, obtaining a polyamide resin thereby. The proportion of non-volatile components and the acid value of the polyamide resin were 30% and 50, respectively.

### Preparation #7 (Synthesis of Resin Particles for Viscosity Control)

Deionized water of 150 weight parts and a reactant-type emulsifier, "RA1022" (methacryl type nonionic sulfate of NIPPON NYUKAZAI CO., LTD.: proportion of active component = 90%) of 40 weight parts (based on the active component) were added into a flask equipped with an agitator, a reflux condensor, a temperature controller, a nitrogen inlet and a dropping funnel, and the contents were heated to 80°C.

Next, 5 weight % of a monomer mixture comprising methylmethacrylate of 54 weight parts, n-butylacrylate of 8 weight parts, 2-hydroxyethylacrylate of 6 weight parts and neopentylglycol dimethacrylate of 32 weight parts were added into the flask. Then, an initiator solution comprising 0.5 weight parts of azobiscyano valeric acid of 0.5 weight parts neutralized by 0.32 weight parts of N,N-dimethylamino ethanol and dissolved in 5 weight parts of deionized water was further added into the flask, whereby the contents of the flask started to react. Ten minutes later, a pre-emulsion prepared by employing deionized water of 140 weight parts, "RA1022" of 21 weight parts, (the proportion of which was based on the active component), and the remainder of the foregoing monomer mixture as well as an initiator solution comprising 0.5 weight parts of azobiscyano valeric acid neutralized by 0.32 weight parts of N,N-dimethylethanol amine and dissolved in deionized water of 200 weight parts, were added dropwise continuously for 120 minutes and 130 minutes, respectively, and then the contents of the flask was maintained at 80°C for 60 minutes.

The contents was cooled and then filtered using a stainless steel net of 400 mesh, whereby resinous particles were obtained. The proportion of non-volatile components and the diameter of the resinous particles were 20% and 0.12µm, respectively.

### Preparation #8 (Synthesis of Acrylic Resin for Base Coating)

Methoxypropanol of 76 weight parts was added into the same reactor employed in Preparation #1, wherein it was heated to 120°C. Next, a monomer solution comprising styrene of 15 weight parts, methylmethacrylate of 63 weight parts, 2-hydroxyethylmethacrylate of 48 weight parts, N-butylacrylate of 117 weight parts, methacrylic acid of 27 weight parts, acryl amide of 30 weight parts, methoxypropanol of 60 weight parts, and t-butylperoxi-2-ethylhexanoate of 3 weight parts was added dropwise into the reactor for 3 hours, and then the contents of the reactor was stirred for 1 hour.

Next, dimethylethanolamine of 28 weight parts and deionized water of 536 weight parts were added into the reactor, obtaining an acrylic resin thereby. The proportion of volatile ingredients, the number average molecular weight, the OH value and the acid value of the obtained acrylic acid were 30%; 12,000; 70; and 58, respectively.

### Preparation #9 (Preparation of Water Metallic Base Paint)

170 weight parts of the acrylic resin obtained in Preparation #8, "C-303" (methylated melamin of Mitsui Toatsu Chemical Industries Kabushiki Kaisha) of 21 weight parts, "7160N" (aluminum paste of TOYO ALUMINIUM CO., LTD.) of 16.3 weight parts, and 1.6 weight parts of 50 % xylene solution of laurilacid phosphate (HLB7.3) were mixed using a stirrer, obtaining a paint composition thereby.

Deionized water was added to the paint composition in order to adjust the viscosity thereof to 30 seconds Ford cup #4 at 20°C, obtaining an aqueous metallic base paint thereby.

### Preparation #10 (Synthesis of Acrylic Resin Including No Polysiloxy Groups)

Methoxypropanol of 126 weight parts was added into the same reactor employed in Preparation #1, wherein it was then heated to 120°C. Next, a monomer solution comprising styrene of 25 weight parts, methylmethacrylate of 73 weight parts, 2-hydroxyethylmethacrylate of 48 weight parts, N-butylacrylate of 127 weight parts, methacrylic acid of 27 weight parts, and t-butylperoxi-2-ethylhexanoate of 90 weight parts was added dropwise into the reactor for 3 hours, and the contents of the reactor was further stirred for 1 hour.

Next, dimethylethanolamine of 28 weight parts and deionized water of 536 weight parts were added into the reactor, obtaining an acrylic resin thereby. The proportion of volatile components, the number average molecular weight, the OH value and the acid value of the acrylic resin were 30%; 5,000; 70; and 58, respectively.

### Embodiments 1 to 12 and Comparative Examples 1 to 5

Clear paints having compositional proportions as indicated in Table 1 and Table 2 were prepared.

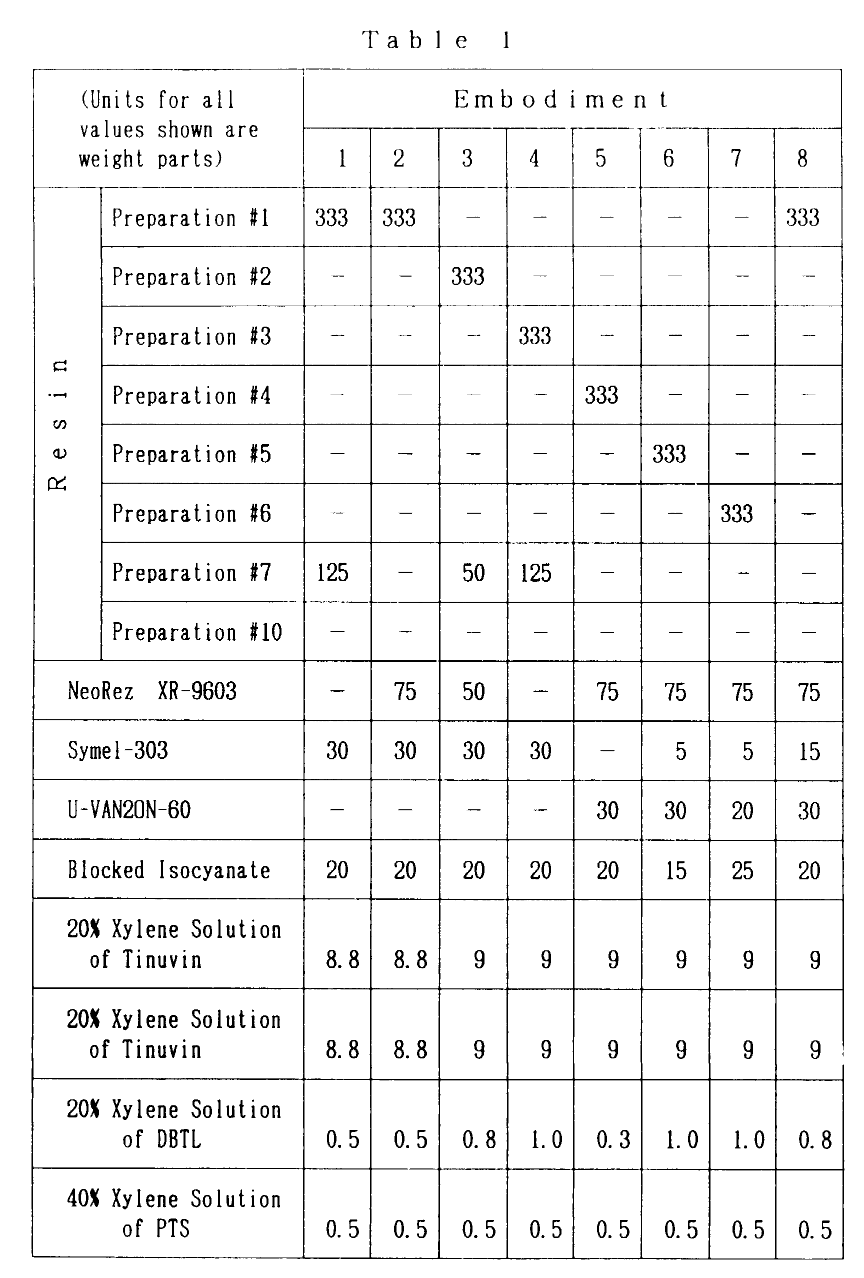

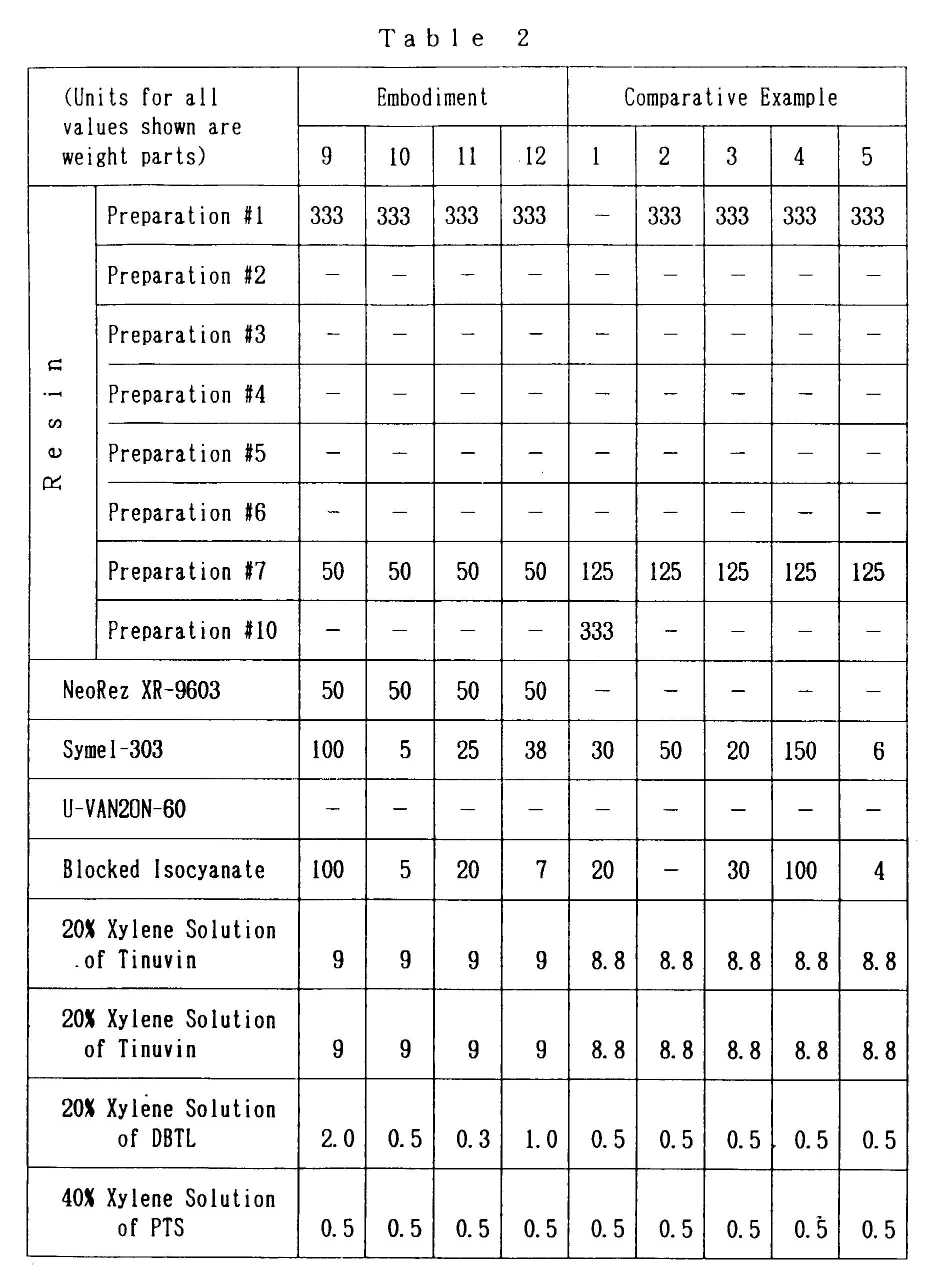

Components indicated in Table 1 and Table 2 are as follows.
NeoRez XR-9603: Urethane emulsion produced by ZENECA RESINS, having a 33% proportion of non-volatile components.
Cymel-303: A methylated melamin product of Mitsui Toatsu Chemical Industries Kabushiki Kaisha.
U-VAN 20N-60: A butylated melamin product of Mitsui Toatsu Chemical Industries Kabushiki Kaisha.
Blocked isocyanate: Isophorone diisocyanate blocked by methylethylketone oxime.
Tinuvin 900: Ultraviolet absorber produced by Ciba-Geigy.
Tinuvin 144: An antioxidant product of Ciba-Geigy.
DBTL: Dibutyltindilaurate.
PTS: p-toluene sulfonic acid.

Multifilm coatings were prepared according to the following method, employing the foregoing clear paints, and acid resistance and water repellency of each multifilm coating was evaluated.

### Formation of Multifilm Coating

The aqueous metallic base paint obtained in Preparation #9 was applied employing an air-sprayer onto a steel plate so as to form a coating of 15 µ m thickness. The applied paint was allowed to set for 5 minutes and was then preheated at 80°C for 5 minutes, whereby a base coating was formed onto the steel plate. Next, viscosity of the foregoing clear paint was adjusted to 30 seconds Ford cup #4 at 20°C by adding deionized water, and the clear paint was then applied employing an air-sprayer onto the base coating so as to form a clear coating of 35 µ m thickness. Then, the applied clear paint was allowed to set for 7 minutes and was then dried at 140°C for 20 minutes, whereby a multifilm coating was obtained.

### Acid Resistance

Six drops of 1N sulfuric acid solution were dropped onto the multifilm coating, and 24 hours later, the appearance of the coating was examined.

### Water Repellency

The steel plate with the foregoing multifilm coating was left to soak in warm water, and 10 days later, the appearance of the coating was examined.

The results of the foregoing evaluations are shown in Table 3. The evaluation criteria were as follows.
○ : No change
Δ : Discoloration or dulling
× : Milkiness or melting

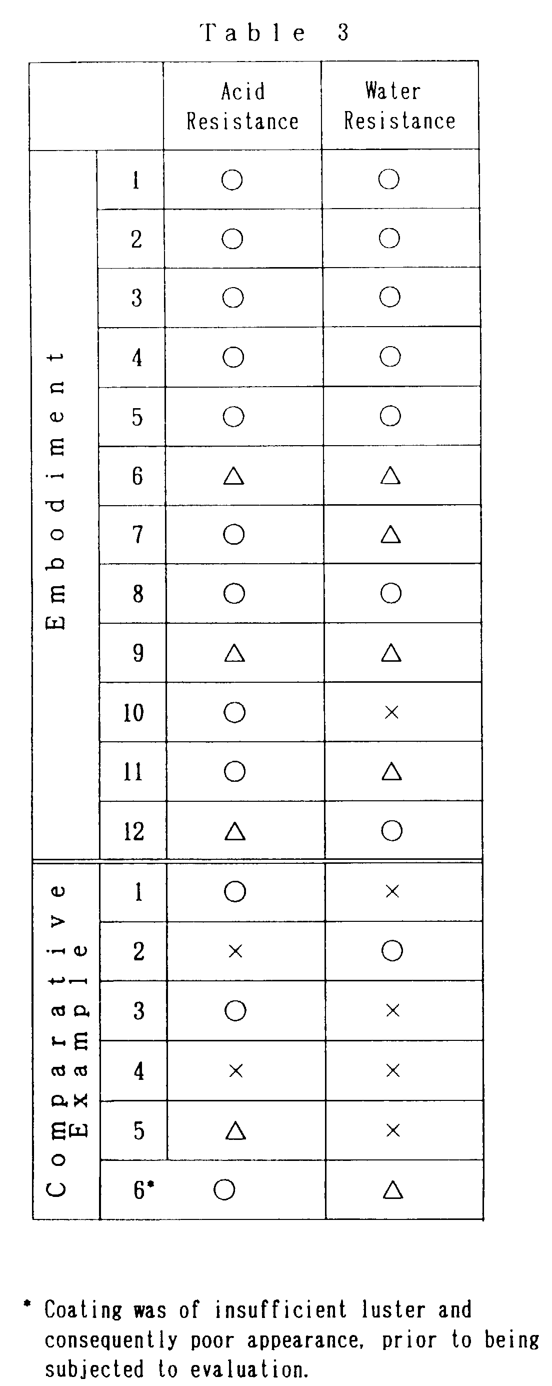

### Comparative Example 6

The same multifilm coating of Embodiment 9 (Table 2) was formed following the method described above, except that the preheating treatment of the base film was not carried out. The multifilm coating was evaluated likewise as were the foregoing embodiments and comparative examples. The results are shown in Table 3.

Various details of the invention may be changed without departing from its spirit nor its scope. Furthermore, the foregoing description of the embodiments according to the present invention is provided for the purpose of illustration only, and not for the purpose of limiting the invention as defined by the appended claims and their equivalents.

## Claims

1. An aqueous surface coating composition comprising an aqueous resin containing polysiloxy groups and which is obtainable by neutralising an acidic resin with alkali, the aqueous resin being selected from aqueous acrylic resin, aqueous polyester resin, aqueous alkyd resin, aqueous urethane resin, and aqueous polyamide resin; and
a cross-linking agent comprising a melamine resin having an alkyl ether group and a non-yellowing, multi-functional, blocked isocyanate compound selected from aliphatic, multi-functional, blocked isocyanates and alicyclic, multi-functional, blocked isocyanates, wherein the mixing ratio by weight of the aqueous resin (A) to the cross-linking agent (B) is A:B = 30:70 to 90:10.

2. An aqueous composition according to claim 1, wherein the mixing ratio by weight of the melamine resin (B1) to the non-yellowing, multi-functional, blocked isocyanate compound (B2) is B1:B2 = 50:50 to 90:10.

3. An aqueous composition according to claim 1, wherein the polysiloxy group is composed of from 5 to 300 repeated units.

4. An aqueous composition according to claim 3, wherein said polysiloxy group is selected from dimethylpolysiloxy groups, diphenylpolysiloxy groups, and methylphenylpolysiloxy groups.

5. An aqueous composition according to claim 4, wherein the non-yellowing, multi-functional, blocked isocyanate compound is isophorone diisocyanate blocked by methyl ethyl ketone oxime.

6. A multi-film surface coating comprising:
a base film formed from a water-base paint; and
a superficial film formed on said base film and made of an aqueous coating composition as defined in any of claims 1 to 5.

7. A multi-film surface coating according to claim 6, wherein the base film and the superficial film are from 10 to 30 µm and from 20 to 80 µm in thickness, respectively.

8. A multi-film surface coating according to claim 7, wherein the base film comprises an aqueous acrylic resin binder which includes amide groups.

9. A multi-film surface coating according to claim 8, wherein the base film is heated before the superficial film is formed thereon.

10. A multi-film surface coating according to claim 9, wherein the superficial film is baked.

11. A multi-film surface coating according to claim 10, wherein the base film is pigmented, and the superficial film is transparent.

## Patentansprüche

1. Wässrige Oberflächenbeschichtungszusammensetzung, umfassend ein wässriges Harz, das Polysiloxygruppen enthält und durch Neutralisieren eines sauren Harzes mit Alkali erhältlich ist, wobei das wässrige Harz ausgewählt ist aus wässrigem Acrylharz, wässrigem Polyesterharz, wässrigem Alkydharz, wässrigem Urethanharz und wässrigem Polyamidharz; und ein Vernetzungsmittel, umfassend ein Melaminharz mit einer Alkylethergruppe und einer nicht gelb werdenden, multi-funktionellen, blockierten Isocyanatverbindung, ausgewählt aus aliphatischen, multi-funktionellen, blockierten Isocyanaten und alizyklischen multifunktionellen, blockierten Isocyanaten, worin das Mischungsverhältnis des wässrigen Harzes (A) zu dem Vernetzungsmittel (B) A:B = 30:70 bis 90:10 ist, bezogen auf das Gewicht.

2. Wässrige Zusammensetzung nach Anspruch 1, worin das Mischungsverhältnis des Melaminharzes (B1) zu der nicht gelb werdenden, multifunktionellen, blockierten Isocyanatverbindung (B2) B1:B2 = 50:50 bis 90:10, ist, bevorzugt 70:30 bis 90:10, bezogen auf das Gewicht.

3. Wässrige Zusammensetzung nach Anspruch 1, worin sich die Polysiloxygruppe aus 5 bis 300 Wiederholungseinheiten zusammensetzt.

4. Wässrige Zusammensetzung nach Anspruch 3, worin die Polysiloxygruppe ausgewählt ist aus Dimethylpolysiloxygruppen, Diphenylpolysiloxygruppen und Methylphenylpolysiloxygruppen.

5. Wässrige Zusammensetzung nach Anspruch 4, worin die nicht gelb werdende, multi-funktionelle, blockierte Isocyanatverbindung Isophorondiisocyanat ist, das durch Methylethylketonoxim blockiert ist.

6. Multifilm-Oberflächenbeschichtung, umfassend:
einen Basisfilm, gebildet aus einer Farbe auf Wasserbasis; und
einen Oberflächenfilm, gebildet auf dem Basisfilm und aus einer wässrigen Beschichtungszusammensetzung wie in einem der Ansprüce 1 bis 5 definiert hergestellt.

7. Multifilm-Oberflächenbeschichtung nach Anspruch 6, worin der Basisfilm und der Oberflächenfilm 10 bis 30 µm beziehungsweise 20 bis 80 µm dick sind.

8. Multifilm-Oberflächenbeschichtung nach Anspruch 7, worin der Basisfilm ein wässriges Acrylharzbindemittel umfaßt, das Amidgruppen enthält.

9. Multifilm-Oberflächenbeschichtung nach Anspruch 8, worin der Basisfilm erwärmt ist, bevor der Oberflächenfilm darauf gebildet ist.

10. Multifilm-Oberflächenbeschichtung nach Anspruch 9, worin der Oberflächenfilm gebacken ist.

11. Multifilm-Oberflächenbeschichtung nach Anspruch 10, worin der Basisfilm pigmentiert und der Oberflächenfilm transparent sind.

## Revendications

1. Composition aqueuse de revêtement de surfaces, comportant une résine aqueuse contenant des groupes polysiloxy et pouvant être obtenue par neutralisation d'une résine acide avec un alcali, la résine aqueuse étant choisie parmi une résine aqueuse acrylique, une résine aqueuse de polyester, une résine aqueuse d'alkyde, une résine aqueuse d'uréthane, une résine aqueuse de polyamide; et
un agent de réticulation comportant une résine de mélamine présentant un groupe alkyléther et un compcsé isocyanate bloqué multifonctionnel ne jaunissant pas, choisi parmi des isocyanates bloqués multifonctionnels aliphatiques, et des isocyanates bloqués multifonctionnels alicycliques, le rapport en poids du mélange de la résine aqueuse (A) et de l'agent de réticulation (B) étant de A:B = 30:70 à 90:10.

2. Composition aqueuse selon la revendication 1, dans laquelle le rapport en poids du mélange de la résine de mélamine (B1) et du composé isocyanate bloqué multifonctionnel ne jaunissant pas (B2) est de B1:B2 = 50:50 à 90:10.

3. Composition aqueuse selon la revendication 1, dans laquelle le groupe polysiloxy est composé de 5 à 300 unités structurales.

4. Composition aqueuse selon la revendication 3, dans laquelle ledit groupe polysiloxy est choisi parmi les groupes diméthylpolysiloxy, les groupes diphénylpolysiloxy et les groupes méthylphénylpolysiloxy.

5. Composition aqueuse selon la revendication 4, dans laquelle le composé isocyanate bloqué multifonctionnel ne jaunissant pas est le diisocyanate d'isophorone bloqué par l'oxime de méthyléthylcétone.

6. Revêtement de surface multifilms comportant:
un film de base formé d'une peinture à base d'eau; et
un film superficiel formé sur ledit film de base et constitué d'une composition aqueuse de revêtement selon l'une quelconque des revendications 1 à 5.

7. Revêtement de surface multifilms selon la revendication 6, dans lequel le film de base et le film superficiel ont une épaisseur de 10 à 30 µm et de 20 à 80 µm, respectivement.

8. Revêtement de surface multifilms selon la revendication 7, dans lequel le film de base comporte un liant de résine acrylique aqueuse qui contient des groupes amide.

9. Revêtement de surface multifilms selon la revendication 8, dans lequel le film de base est chauffé avant que le film superficiel soit formé sur lui.

10. Revêtement de surface multifilms selon la revendication 9, dans lequel le film superficiel est cuit.

11. Revêtement de surface multifilms selon la revendication 10, dans lequel le film de base est pigmenté, et le film superficiel est transparent.
